# EUROPEAN PATENT APPLICATION

(11) **EP 4 492 754 A1**
(43) Date of publication of application: **15.01.2025**
(21) Application number: 23765685.5
(22) Date of filing: 03.02.2023
(51) Int. Cl.: H04L 67/1014, H04L 67/60, H04L 61/4511, H04L 65/61

(54) **METHOD AND APPARATUS FOR SCHEDULING CONTENT DELIVERY NETWORK DOMAIN NAME**

(30) Priority: 11.03.2022 CN 202210242502
(71) Applicant: BEIJING BYTEDANCE NETWORK TECHNOLOGY CO., LTD., Beijing 100041 (CN)
(72) Inventor: XU, Puhang, Beijing 100086 (CN)
(74) Representative: Dentons UK and Middle East LLP
(86) International application number: PCT/CN2023/074321
(87) International publication number: WO 2023/169106

(57) **Abstract**

Provided in the present disclosure are a method and apparatus for scheduling a content delivery network domain name. The method comprises: in response to a resource acquisition request of a client, determining a first content delivery network domain name which is indicated by the resource acquisition request; determining a target domain name set where the first content delivery network domain name is located; on the basis of an availability weight of each content delivery network domain name in the target domain name set, screening out a second content delivery network domain name from the target domain name set; and sending the resource acquisition request to a first server corresponding to the second content delivery network domain name, and receiving resource information which is fed back by the first server. In the embodiments of the present disclosure, by means of an availability weight of each content delivery network domain name in a target domain name set, a second content delivery network domain name is selected for a client, such that an available domain name can be configured without performing interaction with a DNS or a server, making the domain name scheduling efficiency relatively high and the response speed higher.

## Description

### CROSS-REFERENCE TO RELATED APPLICATION(S)

The present application claims the priority of Chinese Patent Application No. 202210242502.X, filed with the Chinese Patent Office on March 11, 2022 and titled "Method and apparatus for scheduling content delivery network domain name", the disclosure of which is incorporated by reference herein in its entirety.

### FIELD

The disclosure relates to the technical field of computers, and particularly relates to a method and apparatus for scheduling a content delivery network domain name.

### BACKGROUND

The Content Delivery Network (CDN) is a smart virtual network built upon the existing networks. By leveraging edge servers distributed globally, the CDN efficiently delivers content to users in their proximity. This is achieved through load balancing, content distribution, scheduling, and other functional modules of a central platform. These processes alleviate network congestion, enhancing response speed, and increasing user access success rates. Key CDN techniques primarily focus on content storage and distribution. Different edge servers are assigned distinct domain names, managing resources by distributing these names to clients. Traditionally, CDN domain name distribution relies on the Domain Name System (DNS) or server requests, which can be time-consuming. In cases where a domain name encounters issues, acquiring a new available domain name is necessary, leading to delays in client switching to a functional CDN domain name.

### SUMMARY

Examples of the disclosure at least provide a method and apparatus for scheduling a content delivery network (CDN) domain name.

In a first aspect, an example of the disclosure provides a method for scheduling a CDN domain name. The method is implemented at a client and includes: determining, in response to a resource obtaining request of the client, a first CDN domain name indicated by the resource obtaining request; determining a target domain name set including the first CDN domain name; selecting a second CDN domain name from the target domain name set according to availability weights of respective CDN domain names in the target domain name set; and transmitting the resource obtaining request to a first server corresponding to the second CDN domain name, and receiving resource information fed back by the first server.

In an alternative embodiment, determining, in response to a resource obtaining request of the client, a first CDN domain name indicated by the resource obtaining request includes: in response to the resource obtaining request initiated by a main thread of the client, calling a background thread of the client to determine the first CDN domain name indicated by the resource obtaining request.

In an alternative embodiment, determining a target domain name set including the first CDN domain name includes: searching a plurality of previously generated CDN domain name sets for the first CDN domain name, and determining the target domain name set as a CDN domain name set in which the first CDN domain name is found; and where the plurality of CDN domain name sets are generated by: obtaining, with a periodicity of preset duration, a plurality of available CDN domain names that match target resources corresponding to target pages loaded by the client; and generating initialized availability weights of respective available CDN domain names, and generating CDN domain name sets corresponding to respective target resources according to the availability weights.

In an alternative embodiment, selecting a second CDN domain name from the target domain name set according to availability weights of respective CDN domain names in the target domain name set includes: generating a corresponding number of selection units for each CDN domain name in the target domain name set according to the availability weights; randomly extracting one target selection unit from the selection units; and determining the second CDN domain name as a CDN domain name corresponding to the target selection unit.

In an alternative embodiment, selecting a second CDN domain name from the target domain name set according to availability weights of respective CDN domain names in the target domain name set includes: selecting the second CDN domain name from the target domain name set according to the availability weights of respective CDN domain names in the target domain name set when a request mode indicated by the resource obtaining request is a random domain name selection mode; and setting, when the request mode indicated by the resource obtaining request is a specified domain name selection mode, the first CDN domain name as the second CDN domain name.

In an alternative embodiment, the method further includes: lowering an availability weight of the second CDN domain name by a first preset threshold when the first server fails to feed back resource information within a first preset duration, and re-selecting the second CDN domain name from the target domain name set.

In an alternative embodiment, re-selecting the second CDN domain name from the target domain name set includes: adjusting the request mode indicated by the resource obtaining request to the specified domain name selection mode when the request mode indicated by the resource obtaining request is the random domain name selection mode, and re-selecting the second CDN domain name from the target domain name set; and selecting sequentially a CDN domain name with a non-zero availability weight that has not been selected from the target domain name set as the second CDN domain name when the request mode indicated by the resource obtaining request is the specified domain name selection mode.

In an alternative embodiment, the method further includes: increasing availability weights lower than a preset maximum value by a second preset threshold after a second preset duration, and adjusting an increased availability weight beyond the preset maximum value to the preset maximum value.

In a second aspect, an example of the disclosure further provides an apparatus for scheduling a CDN domain name. The apparatus is applied to a client side, and includes: a first determination module configured to determine, in response to a resource obtaining request of the client, a first CDN domain name indicated by the resource obtaining request; a second determination module configured to determine a target domain name set including the first CDN domain name; a selecting module configured to select a second CDN domain name from the target domain name set according to availability weights of respective CDN domain names in the target domain name set; and a transmitting module configured to transmit the resource obtaining request to a first server corresponding to the second CDN domain name, and receive resource information fed back by the first server.

In an alternative embodiment, the first determination module is configured to determine, in response to a resource obtaining request of the client, a first CDN domain name indicated by the resource obtaining request by: in response to the resource obtaining request initiated by a main thread of the client, calling a background thread of the client to determine the first CDN domain name indicated by the resource obtaining request.

In an alternative embodiment, the second determination module is configured to determine a target domain name set including the first CDN domain name by: searching a plurality of previously generated CDN domain name sets for the first CDN domain name, and determine the target domain name set as a CDN domain name set in which the first CDN domain name is found.

The apparatus further includes a generation module configured to: obtain, with a periodicity of preset duration, a plurality of available CDN domain names that match target resources corresponding to target pages loaded by the client; and generate initialized availability weights of respective available CDN domain names, and generate CDN domain name sets corresponding to respective target resources according to the availability weights.

In an alternative embodiment, the selecting module is configured to select a second CDN domain name from the target domain name set according to availability weights of respective CDN domain names in the target domain name set by: generating a corresponding number of selection units for each CDN domain name in the target domain name set according to the availability weights; randomly extracting one target selection unit from the selection units; and determining the second CDN domain name as a CDN domain name corresponding to the target selection unit.

In an alternative embodiment, the selecting module is configured to select a second CDN domain name from the target domain name set according to availability weights of respective CDN domain names in the target domain name set by: selecting the second CDN domain name from the target domain name set according to the availability weights of respective CDN domain names in the target domain name set when a request mode indicated by the resource obtaining request is a random domain name selection mode; and setting, when the request mode indicated by the resource obtaining request is a specified domain name selection mode, the first CDN domain name as the second CDN domain name.

In an alternative embodiment, the selecting module is further configured to: lower an availability weight of the second CDN domain name by a first preset threshold when the first server fails to feed back resource information within a first preset duration, and re-select the second CDN domain name from the target domain name set.

In an alternative embodiment, the selecting module is configured to re-select the second CDN domain name from the target domain name set by adjusting the request mode indicated by the resource obtaining request to the specified domain name selection mode when the request mode indicated by the resource obtaining request is the random domain name selection mode, and re-selecting the second CDN domain name from the target domain name set; and to select sequentially a CDN domain name with a non-zero availability weight that has not been selected from the target domain name set as the second CDN domain name when the request mode indicated by the resource obtaining request is the specified domain name selection mode.

In an alternative embodiment, the apparatus further includes an adjustment module configured to increase availability weights lower than a preset maximum value by a second preset threshold after a second preset duration, and adjust an increased availability weight beyond the preset maximum value to the preset maximum value.

In a third aspect, an example of the disclosure further provides an electronic device. The electronic device includes: a processor, a memory, and a bus. The memory stores a machine-readable instruction executable by the processor, the processor communicates with the memory via the bus when the electronic device is operating, and the machine-readable instruction, when executed by the processor, performs steps of the first aspect or any possible embodiment in the first aspect.

In a fourth aspect, an example of the disclosure further provides a computer-readable storage medium. The computer-readable storage medium stores a computer program thereon. The computer program, when executed by a processor, performs steps of the first aspect or any possible embodiment in the first aspect.

The examples of the disclosure provide a method and apparatus for scheduling a CDN domain name. The method firstly determines, in response to a resource obtaining request of the client, a first CDN domain name indicated by the resource obtaining request; determines a target domain name set where the first CDN domain name is located; then selects a second CDN domain name from the target domain name set according to availability weights of respective CDN domain names in the target domain name set; and finally sends the resource obtaining request to a first server corresponding to the second CDN domain name, and receives resource information fed back by the first server. According to the examples of the disclosure, the second CDN domain name is selected for the client by means of the availability weights of respective CDN domain names in the target domain name set, and available domain names can be configured without interacting with a domain name system (DNS) or a server, such that domain name scheduling efficiency is high, and a response speed is high.

In order to make the above objectives, features and advantages of the disclosure more obvious and understandable, preferred examples will be described in detail below in conjunction with the accompanying drawings.

### BRIEF DESCRIPTION OF THE DRAWINGS

In order to more clearly explain the technical solutions of examples of the disclosure, the accompanying drawings required for use in the examples are briefly introduced below. The accompanying drawings are incorporated in the description as a constituent part of the description, illustrate examples conforming to the disclosure, and serve to explain the technical solutions of the disclosure together with the description. It is to be understood that the following accompanying drawings show merely some examples of the disclosure and are therefore not to be considered as limiting of the scope, and those of ordinary skill in the art can still derive other related accompanying drawings from these accompanying drawings without making creative efforts.
FIG. 1 is a flowchart of a method for scheduling a content delivery network (CDN) domain name in accordance with the present disclosure;
FIG. 2 is a flowchart of another method for scheduling a CDN domain name in accordance with the present disclosure;
FIG. 3 is a schematic diagram of an apparatus for scheduling a CDN domain name in accordance with the present disclosure; and
FIG. 4 is a schematic diagram of an electronic device in accordance with the present disclosure.

### DETAILED DESCRIPTION OF EMBODIMENTS

In order to make the objectives, technical solutions, and advantages of the examples of the disclosure clearer, the technical solutions in the examples of the disclosure will be clearly and completely described below in conjunction with the accompanying drawings in the examples of the disclosure. Apparently, the described examples are merely some examples rather than all examples of the disclosure. The components of the examples of the disclosure, generally described and illustrated in the accompanying drawings herein, may be arranged and designed in a variety of different configurations. Therefore, the following detailed description of the examples of the disclosure provided in the accompanying drawings is not intended to limit the scope of the claimed disclosure, but is merely representative of selected examples of the disclosure. Based on the examples of the disclosure, all other examples acquired by those skilled in the art without making creative efforts fall within the scope of protection of the disclosure.

It should be noted that similar numerals and letters denote similar items in the following accompanying drawings, and therefore, once an item is defined in one accompanying drawing, it need not be further defined and explained in the subsequent accompanying drawings.

As used herein, the term "and/or" is merely used to describe an associated relation and means three relations, for example, A and/or B may mean A alone, A and B together, and B alone. Moreover, the term "at least one" herein mean any one of a plurality or any combination of at least two of a plurality, for example, including at least one of A, B, C may mean including any one or more elements selected from a group consisting of A, B, and C.

Through investigation, it is found that content delivery network (CDN) domain name distribution is usually carried out by a domain name system (DNS) or a server. The DNS may manage operations of each domain name of a CDN and allocate appropriate domain names for clients. The server may also respond to a domain name obtaining request from a client and return an available domain name. After obtaining the domain name, the client may attempt to access the domain name. If the domain name is abnormal, the client needs to request a new available domain name from the DNS or the server again. This procedure requires two or more network communications, causing the client to spend longer time on accessing the available domain name.

In view of above, the present disclosure provides a method and apparatus for efficiently scheduling a CDN domain name. Using the availability weights of various CDN domain names within the target domain name set, a second CDN domain name is chosen for the client. This selection process allows for configuring available domain names without the need to interact with a DNS or a server. As a result, both the efficiency of domain name scheduling and the response speed are significantly enhanced.

In order to facilitate understanding of the examples, a method for scheduling a CDN domain name disclosed in the examples of the disclosure is first described in detail. An subject for performing the method for scheduling the CDN domain name provided in the example of the disclosure is generally a computer device with a certain computing capability. The computing device has a browser function and can access web pages and the CDN. In some possible implementations, the method for scheduling the CDN domain name may be implemented by a processor executing a computer-readable instructions stored in a memory.

The method for scheduling a CDN domain name in accordance with the present disclosure is described from the perspective of a client as an example.

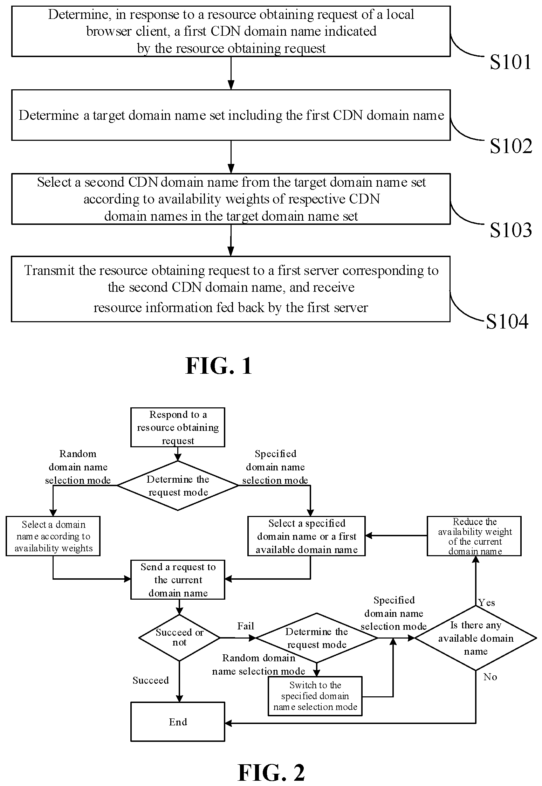

FIG. 1 is a flowchart of a method for scheduling a CDN domain name in accordance with the present disclosure. The method includes S101-S104.

S101. Determine, in response to a resource obtaining request of the client, a first CDN domain name indicated by the resource obtaining request.

The method may be performed by a client running a browser or an application program having a browser function. A main thread for accessing a page may be run on the client. A web worker for a page object may be run in a background thread (child thread) and can execute the steps in the examples of the disclosure.

After the main thread of the page running on the client initiates a resource obtaining request, the page object running on the child thread may determine, in response to the resource obtaining request, a first CDN domain name indicated by the resource obtaining request. The first CDN domain name may be a domain name indicated by default by the page and accessed by the client. Since the domain name is preset, a physical distance between the client and a server corresponding to the domain name may be relatively long, and a communication effect may be poor. Therefore, domain name scheduling can be carried out to select a more appropriate domain name to obtain resources.

In a specific implementation, the page object running on the child thread may first determine whether the resource obtaining request is an obtaining request initiated for the CDN domain name. If so, the page object responds to the resource obtaining request, and if not, the page object directly releases the request to obtain the resource in an original manner.

S 102. Determine a target domain name set including the first CDN domain name.

In this step, the page object running on the child thread may periodically obtain, with a periodicity of preset duration, a plurality of available CDN domain names that match target resources corresponding to target pages loaded by the client, generate availability weights of respective available CDN domain names, and then generate or update a CDN domain name set corresponding to the target page. The availability weights of the respective CDN domain names may be indicated in the CDN domain name set. The availability weight may be determined based on the physical distance between the client and the server corresponding to the domain name, and/or health of the domain name.

After determining the first CDN domain name, a search may be performed from a plurality of CDN domain name sets, and the target domain name set is determined as a CDN domain name set in which the first CDN domain name is found.

S103. Select a second CDN domain name from the target domain name set according to availability weights of respective CDN domain names in the target domain name set.

In the step, a second CDN domain name may be selected for the client according to the availability weight of the respective CDN domain names.

Illustratively, a corresponding number of selection units may be generated for each CDN domain name in the target domain name set according to the availability weights. Then, a target selection unit is randomly selected from the selection units. Finally, the second CDN domain name is determined as a CDN domain name corresponding to the target selection unit.

The number of selection units may be determined according to the availability weights. For example, an availability weight of a CDN domain name is 1.5, the availability weight may be rounded. Rounding may include a plurality of ways. For example, decimal places of the availability weight may be determined first, and then the availability weight may be multiplied by power of the decimal places of 10. Alternatively, a rounding method may be used to round the availability weight. Then, the number of selection units of the corresponding CDN domain name may be determined as an integer result.

In a specific implementation process, the client may use a plurality of request modes for domain names. A specifically used request mode may be indicated by a resource obtaining request or preset by a page object running on a child thread. For example, the request modes may include a random domain name selection mode and a specified domain name selection mode. In a case that the current request mode is the random selection mode, the second CDN domain name may be determined based on the availability weights. In a case that the request mode is the specified domain name selection mode, the first CDN domain name may be directly used as the second CDN domain name.

Further, in the specified domain name selection mode, in a case that the availability weight of the first CDN domain name is less than or equal to a preset threshold, it may be considered that the first CDN domain name is unavailable, and a CDN domain name may be selected from the target domain name set as the second CDN domain name. For example, the CDN domain name with the highest availability weight may be selected as the second CDN domain name, and alternatively, a first CDN domain name that has not been selected may be selected as the second CDN domain name according to a preset order.

S104. Transmit the resource obtaining request to a first server corresponding to the second CDN domain name, and receive resource information fed back by the first server.

After the second CDN domain name is determined, the resource obtaining request may be transmitted to the first server corresponding to the second CDN domain name. The first server may be an edge server in the CDN and store resource information corresponding to the resource obtaining request. After receiving the resource obtaining request, the first server may transmit the resource information corresponding to the resource obtaining request to the client.

In a case that the first server fails to feed back the resource information within a first preset duration, it indicates that abnormality occurs in the first server, that is, abnormality occurs in the CDN domain name corresponding to the first server. In this case, the availability weight of the second CDN domain name may be lowered, specifically, the availability weight may be lowered by a first preset threshold, or directly lowered to 0, and then the second CDN domain name may be selected again from the target domain name set.

In this way, when the domain name accessed is abnormal, the domain name can be rescheduled without interacting with a server or a DNS, and the efficiency is high.

When re-selecting the second CDN domain name from the target domain name set, in a case that the request mode is the random domain name selection mode, a CDN domain name with a non-zero availability weight that has not been selected is selected sequentially from the target domain name set as the second CDN domain name. A CDN domain name with a non-zero availability weight that has not been selected is selected sequentially from the target domain name set as the second CDN domain name in a case that the request mode indicated by the resource obtaining request is the specified domain name selection mode. That is to say, when domain name is abnormal, in a case that the request mode is the random domain name selection mode, it is switched to the specified domain name selection mode to prevent repeated random selection of an abnormal domain name.

Further, the domain name may return to normal over time, and the availability weight lower than a preset maximum value may be increased by a second preset threshold after a second preset duration, so as to gradually increase the availability weight of the domain name. When the domain name is abnormal, the availability weight of the domain name may be lowered, so as to achieve dynamic balance of the availability weight.

Herein, after the availability weight is increased, the increased availability weight beyond the preset maximum value may be adjusted to the preset maximum value, such that the availability weight is prevented from beyond an upper limit.

FIG. 2 is a flowchart of another method for scheduling a CDN domain name in accordance with the present disclosure. The method first determines a currently adopted request mode in response to a resource obtaining request from a client; selects a domain name according to availability weights in a case that the request mode is a random domain name selection mode, and in a case that the request mode is a specified domain name selection mode, selects a domain name specified by the resource obtaining request or sequentially selects a first domain name that is available and has not been selected; transmits the resource obtaining request to a server corresponding to a current domain name; determines whether the request succeeds; determines whether the current domain name selection mode is the random domain name selection mode in a case that the request fails; if yes, modifies the random domain name selection mode to the specified domain name selection mode; then determines whether there are available domain names; and lowers an availability weight of a previously selected domain name in a case that there are available domain names, returns to a step of determining a domain name used in the specified domain name selection mode, reselects a domain name, and initiate a request.

The examples of the disclosure provide a method for scheduling a CDN domain name. The method firstly determines, in response to a resource obtaining request of the client, a first CDN domain name indicated by the resource obtaining request; determines a target domain name set where the first CDN domain name is located; then selects a second CDN domain name from the target domain name set according to availability weights of respective CDN domain names in the target domain name set; and finally sends the resource obtaining request to a first server corresponding to the second CDN domain name, and receives resource information fed back by the first server. According to the examples of the disclosure, the second CDN domain name is selected for the client by means of the availability weights of respective CDN domain names in the target domain name set, and available domain names can be configured without interacting with a DNS or a server, such that domain name scheduling efficiency is high, and a response speed is high.

It is to be understand that in the above method of the specific embodiments, a writing order of each step does not mean an exact execution order which constitutes any limitation on an implementation process, and a specific execution order of each step should be determined according to its function and possible internal logic.

Based on the same inventive concept, the examples of the disclosure further provide an apparatus for scheduling a CDN domain name corresponding to the method for scheduling CDN domain names. Since a principle of solving the problem by the apparatus in the examples of the disclosure is similar to that of the method for scheduling CDN domain names in the examples of the disclosure, reference may be made for implementation of the apparatus to implementation of the method, which are not repeated herein.

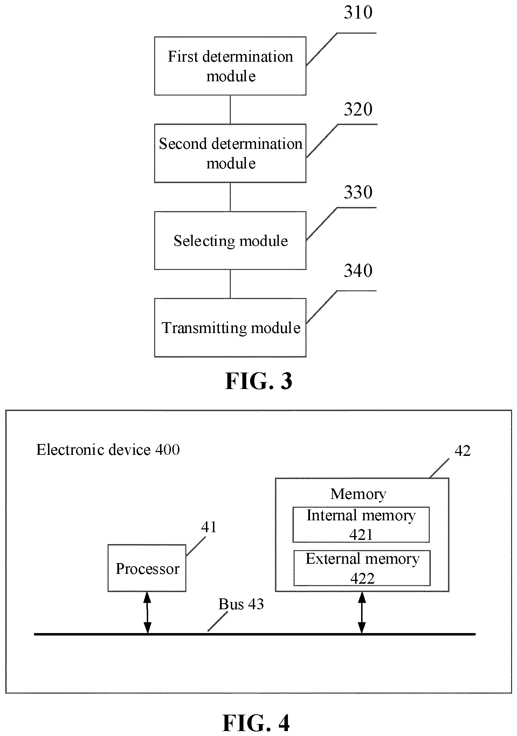

FIG. 3 is a schematic diagram of an apparatus for scheduling a CDN domain name provided in accordance with the present disclosure. The apparatus includes: a first determination module 310 configured to determine, in response to a resource obtaining request of the client, a first CDN domain name indicated by the resource obtaining request; a second determination module 320 configured to determine a target domain name set including the first CDN domain name; a selecting module 330 configured to select a second CDN domain name from the target domain name set according to availability weights of respective CDN domain names in the target domain name set; and a transmitting module 340 configured to transmit the resource obtaining request to a first server corresponding to the second CDN domain name, and receive resource information fed back by the first server.

In an alternative embodiment, the first determination module 310 is configured to determine, in response to a resource obtaining request of the client, a first CDN domain name indicated by the resource obtaining request as follows: in response to the resource obtaining request initiated by a main thread of the client, call a background thread of the client to determine the first CDN domain name indicated by the resource obtaining request.

In an alternative embodiment, the second determination module 320 is configured to determine a target domain name set including the first CDN domain name as follows: search a plurality of previously generated CDN domain name sets for the first CDN domain name, and determine the target domain name set as a CDN domain name set in which the first CDN domain name is found.

The apparatus further includes a generation module configured to obtain, with a periodicity of preset duration, a plurality of available CDN domain names that match target resources corresponding to target pages loaded by the client; and generate initialized availability weights of respective available CDN domain names, and generate CDN domain name sets corresponding to respective target resources according to the availability weights.

In an alternative embodiment, the selecting module 330 is configured to select a second CDN domain name from the target domain name set according to availability weights of respective CDN domain names in the target domain name set as follows: generate a corresponding number of selection units for each CDN domain name in the target domain name set according to the availability weights; randomly extract one target selection unit from the selection units; and determine the second CDN domain name as a CDN domain name corresponding to the target selection unit.

In an alternative embodiment, the selecting module 330 is configured to select a second CDN domain name from the target domain name set according to availability weights of respective CDN domain names in the target domain name set as follows: select the second CDN domain name from the target domain name set according to the availability weights of respective CDN domain names in the target domain name set when a request mode indicated by the resource obtaining request is a random domain name selection mode; and set, when the request mode indicated by the resource obtaining request is a specified domain name selection mode, the first CDN domain name as the second CDN domain name.

In an alternative embodiment, the selecting module 330 is further configured to: lower an availability weight of the second CDN domain name by a first preset threshold when the first server fails to feed back resource information within a first preset duration, and re-select the second CDN domain name from the target domain name set.

In an alternative embodiment, the selecting module 330 is configured to re-select the second CDN domain name from the target domain name set as follows: adjust the request mode indicated by the resource obtaining request to the specified domain name selection mode when the request mode indicated by the resource obtaining request is the random domain name selection mode, and re-select the second CDN domain name from the target domain name set; and select sequentially a CDN domain name with a non-zero availability weight that has not been selected from the target domain name set as the second CDN domain name when the request mode indicated by the resource obtaining request is the specified domain name selection mode.

In an alternative embodiment, the apparatus further includes an adjustment module configured to: increase availability weights lower than a preset maximum value by a second preset threshold after a second preset duration, and adjust an increased availability weight beyond the preset maximum value to the preset maximum value.

Reference may be made for description of a processing flow of each module in the apparatus and an interaction flow between modules to relevant description in the above method examples, and details are not repeated herein.

Corresponding to the method for scheduling the CDN domain name in FIG. 1, the examples of the disclosure further provide an electronic device 400. As shown in FIG. 4, a schematic structural diagram of the electronic device 400 provided in the examples of the disclosure includes: a processor 41, a memory 42, and a bus 43. The memory 42 is configured to store an execution instruction and includes an internal memory 421 and an external memory 422. The internal memory 421 is configured to temporarily store calculation data in the processor 41 and data exchanged with the external memory 422 such as a hard disk. The processor 41 exchanges data with the external memory 422 through the internal memory 421. When the electronic device 400 operates, the processor 41 communicates with the internal memory 42 through the bus 43, such that the processor 41 executes instructions to: determine, in response to a resource obtaining request of the client, a first CDN domain name indicated by the resource obtaining request; determine a target domain name set including the first CDN domain name; select a second CDN domain name from the target domain name set according to availability weights of respective CDN domain names in the target domain name set; and transmit the resource obtaining request to a first server corresponding to the second CDN domain name, and receive resource information fed back by the first server.

In an alternative embodiment, the instructions, executed by the processor 41, of determining, in response to a resource obtaining request of the client, a first CDN domain name indicated by the resource obtaining request includes: in response to the resource obtaining request initiated by a main thread of the client, call a background thread of the client to determine the first CDN domain name indicated by the resource obtaining request.

In an alternative embodiment, the instructions, executed by the processor 41, of determining a target domain name set including the first CDN domain name includes: search a plurality of previously generated CDN domain name sets for the first CDN domain name, and determine the target domain name set as a CDN domain name set in which the first CDN domain name is found.

The processor 41 is further configured to obtain, with a periodicity of preset duration, a plurality of available CDN domain names that match target resources corresponding to target pages loaded by the client; and generate initialized availability weights of respective available CDN domain names, and generate CDN domain name sets corresponding to respective target resources according to the availability weights.

In an alternative embodiment, the instructions, executed by the processor 41, of selecting a second CDN domain name from the target domain name set according to availability weights of respective CDN domain names in the target domain name set includes : generate a corresponding number of selection units for each CDN domain name in the target domain name set according to the availability weights; randomly extract one target selection unit from the selection units; and determine the second CDN domain name as a CDN domain name corresponding to the target selection unit.

In an alternative embodiment, the instructions, executed by the processor 41, of selecting a second CDN domain name from the target domain name set according to availability weights of respective CDN domain names in the target domain name set includes instructions to:

select the second CDN domain name from the target domain name set according to the availability weights of respective CDN domain names in the target domain name set when a request mode indicated by the resource obtaining request is a random domain name selection mode; and set, when the request mode indicated by the resource obtaining request is a specified domain name selection mode, the first CDN domain name as the second CDN domain name.

In an alternative embodiment, the instruction executed by the processor 41 further includes instructions to: lower an availability weight of the second CDN domain name by a first preset threshold when the first server fails to feed back resource information within a first preset duration, and re-select the second CDN domain name from the target domain name set.

In an alternative embodiment, the instructions, executed by the processor 41, of re-selecting the second CDN domain name from the target domain name set includes instructions to: adjust the request mode indicated by the resource obtaining request to the specified domain name selection mode when the request mode indicated by the resource obtaining request is the random domain name selection mode, and re-select the second CDN domain name from the target domain name set; and select sequentially a CDN domain name with a non-zero availability weight that has not been selected from the target domain name set as the second CDN domain name when the request mode indicated by the resource obtaining request is the specified domain name selection mode.

In an alternative embodiment, the instruction executed by the processor 41 further includes instructions to: increase availability weights lower than a preset maximum value by a second preset threshold after a second preset duration, and adjust an increased availability weight beyond the preset maximum value to the preset maximum value.

The examples of the disclosure further provide a computer-readable storage medium. The computer-readable storage medium stores a computer program thereon. The computer program, when executed by a processor, performs steps of the method for scheduling CDN domain names in the method examples. The storage medium may be a volatile or nonvolatile computer-readable storage medium.

The examples of the disclosure further provide a computer program product. The computer program product carries a program code. An instruction included in the program code is configured to execute steps of the method for scheduling the CDN domain name in the method examples. Reference may be made for details to the above method examples, which are not repeated herein.

The computer program product may be implemented by hardware, software or a combination thereof. In an alternative example, the compute program product is embodied as a compute storage medium. In another alternative example, the computer program product is embodied as a software product, for example, a software development kit (SDK), etc.

Those skilled in the art will clearly appreciate that, for convenience and conciseness of description, reference can be made to corresponding processes in the foregoing method examples for specific working processes of the above systems, and apparatuses, which are not repeated herein. In the several examples provided in the disclosure, it should be understood that the disclosed systems, apparatuses and methods can be implemented in other ways. The apparatus examples described above are merely illustrative. For example, the division of the units is merely a division of logical functions, and in practice there can be other ways of division. For example, a plurality of units or assemblies can be merged or integrated into another system, or some features can be ignored or not executed. Furthermore, coupling or direct coupling or communication connection between each other as shown or discussed can be achieved by means of some communication interfaces, and indirect coupling or communication connection between apparatuses or units can be in an electrical form, a mechanical form or other forms.

The units illustrated as separate components may be physically separated or not, and the components shown as units may be physical units or not, that is, may be located in one place, or may also be distributed over a plurality of network units. Some or all of the units may be selected according to actual needs to achieve the objective of the solution of the examples.

Moreover, each functional unit in each example of the disclosure may be integrated in one processing unit, or each unit may exist separately and physically, or two or more units may be integrated in one unit.

The functions, if implemented as software functional units and sold or used as stand-alone products, may be stored in a non-volatile computer-readable storage medium executable by a processor. Based on such understanding, the technical solution of the disclosure can be embodied in the form of a software product in essence or a part contributing to the prior art or part of the technical solution, and the computer software product is stored in a storage medium and includes several instructions for making a computer device (which can be a personal computer, a server or a network device, etc.) execute all or part of the steps of the methods described in the various examples of the disclosure. The foregoing storage medium includes: a USB flash disk, a mobile hard disk, a read-only memory (ROM), a random access memory (RAM), a magnetic disk, an optical disk and other media capable of storing program codes.

Finally, it should be noted that the examples described above are only specific embodiments of the disclosure, and are used to illustrate the technical solution of the disclosure, rather than limit the technical solution. The scope of protection of the disclosure is not limited thereto. Although the disclosure is described in detail with reference to the examples described above, those skilled in the art should understand that any person skilled in the art may still modify the technical solutions described in the foregoing examples or easily think of changes within the technical scope disclosed in the disclosure, or make equivalent substitutions to some of the technical features thereof. These modifications, changes or substitutions shall not deviate the essence of the corresponding technical solutions from the spirit and scope of the technical solutions of the examples disclosed in the disclosure, and shall be covered within the scope of protection of the disclosure. Therefore, the scope of protection of the disclosure shall be subject to the scope of protection of the claims.

## Claims

1. A method for scheduling a content delivery network (CDN) domain name, the method being implemented at a client and comprising:
determining, in response to a resource obtaining request of the client, a first CDN domain name indicated by the resource obtaining request;
determining a target domain name set including the first CDN domain name;
selecting a second CDN domain name from the target domain name set according to availability weights of respective CDN domain names in the target domain name set; and
transmitting the resource obtaining request to a first server corresponding to the second CDN domain name, and receiving resource information fed back by the first server.

2. The method of claim 1, wherein determining, in response to a resource obtaining request of the client, a first CDN domain name indicated by the resource obtaining request comprises:
in response to the resource obtaining request initiated by a main thread of the client, calling a background thread of the client to determine the first CDN domain name indicated by the resource obtaining request.

3. The method of claim 1, wherein determining a target domain name set including the first CDN domain name comprises:
searching a plurality of previously generated CDN domain name sets for the first CDN domain name, and determining the target domain name set as a CDN domain name set in which the first CDN domain name is found; and
wherein the plurality of CDN domain name sets are generated by:
obtaining, with a periodicity of preset duration, a plurality of available CDN domain names that match target resources corresponding to target pages loaded by the client; and
generating initialized availability weights of respective available CDN domain names, and generating CDN domain name sets corresponding to respective target resources according to the availability weights.

4. The method of claim 1, wherein selecting a second CDN domain name from the target domain name set according to availability weights of respective CDN domain names in the target domain name set comprises:
generating a corresponding number of selection units for each CDN domain name in the target domain name set according to the availability weights;
randomly extracting one target selection unit from the selection units; and
determining the second CDN domain name as a CDN domain name corresponding to the target selection unit.

5. The method of claim 1, wherein selecting a second CDN domain name from the target domain name set according to availability weights of respective CDN domain names in the target domain name set comprises:
selecting the second CDN domain name from the target domain name set according to the availability weights of respective CDN domain names in the target domain name set when a request mode indicated by the resource obtaining request is a random domain name selection mode; and
setting, when the request mode indicated by the resource obtaining request is a specified domain name selection mode, the first CDN domain name as the second CDN domain name.

6. The method of claim 5, further comprising:
lowering an availability weight of the second CDN domain name by a first preset threshold when the first server fails to feed back resource information within a first preset duration, and re-selecting the second CDN domain name from the target domain name set.

7. The method of claim 6, wherein re-selecting the second CDN domain name from the target domain name set comprises:
adjusting the request mode indicated by the resource obtaining request to the specified domain name selection mode when the request mode indicated by the resource obtaining request is the random domain name selection mode, and re-selecting the second CDN domain name from the target domain name set; and
selecting sequentially a CDN domain name with a non-zero availability weight that has not been selected from the target domain name set as the second CDN domain name when the request mode indicated by the resource obtaining request is the specified domain name selection mode.

8. The method of claim 1, further comprising:
increasing availability weights lower than a preset maximum value by a second preset threshold after a second preset duration, and adjusting the increased availability weight beyond the preset maximum value to the preset maximum value.

9. An apparatus for scheduling a CDN domain name, applied to a client, comprising:
a first determination module configured to determine, in response to a resource obtaining request of the client, a first CDN domain name indicated by the resource obtaining request;
a second determination module configured to determine a target domain name set including the first CDN domain name;
a selecting module configured to select a second CDN domain name from the target domain name set according to availability weights of respective CDN domain names in the target domain name set; and
a transmitting module configured to transmit the resource obtaining request to a first server corresponding to the second CDN domain name, and receive resource information fed back by the first server.

10. An electronic device, comprising: a processor, a memory, and a bus, wherein the memory stores a machine-readable instruction executable by the processor, the processor communicates with the memory via the bus when the electronic device is operating, and the machine-readable instruction, when executed by the processor, performs steps of the method of any of claims 1-8.

11. A computer-readable storage medium storing a computer program thereon, wherein the computer program, when executed by a processor, performs steps of the method of any of claims 1-8.

12. A computer program product carrying a program code, wherein instructions comprised in the program code are configured to perform steps of the method of any of claims 1-8.
